# EUROPÄISCHE PATENTSCHRIFT

(11) **EP 3 085 275 B1**
(45) Veröffentlichungstag und Bekanntmachung des Hinweises auf die Patenterteilung: **27.09.2017**
(21) Anmeldenummer: 16163711.1
(22) Anmeldetag: 04.04.2016
(51) Int. Cl.: A47C 17/40, F16F 9/516, F16F 9/58

(54) **SCHWENKANORDNUNG**
PIVOT ASSEMBLY
ENSEMBLE PIVOTANT

(30) Priorität: 22.04.2015 DE 102015106134
(43) Veröffentlichungstag der Anmeldung: 26.10.2016
(73) Patentinhaber: Stabilus GmbH, 56070 Koblenz (DE)
(72) Erfinder: Oberender, Mike, 56645 Nickernich (DE); Schmitt, Walter, 56295 Rüber (DE)
(74) Vertreter: Klein, Thomas

(56) Entgegenhaltungen:
- CH-A- 473 558
- US-A- 3 603 578
- US-B1- 8 127 901

## Beschreibung

Die Erfindung bezieht sich auf eine Schwenkanordnung mit einem Schwenkelement, das zwischen einer senkrecht nach oben gerichteten Ruheposition und einer waagrecht gerichteten Betriebsposition um eine an seinem einen Endbereich angeordnete Schwenkachse schwenkbar ist, wobei die Schwenkbewegung des Schwenkelements durch eine Gasdruckfeder kraftunterstützbar und dämpfbar ist.

Bei einer derartigen bekannten Schwenkanordnung (siehe z.B. CH473558 A und US3603578 A) ist das Schwenkelement ein Schwenkbett, das aus seiner nach oben gerichteten Ruheposition in seine waagrecht gerichtete Schlafposition ausgeklappt bzw. aus seiner Schlafposition in seine Ruheposition eingeklappt werden kann. Um sowohl beim Aus- als auch beim Einklappen sanft gedämpft zu werden sind zwei Gasdruckfedern gegenläufig angeordnet.
Diese Schwenkanordnung weist einen aufwendigen Aufbau auf und benötigt einen großen Bauraum.

Aufgabe der Erfindung ist es daher eine Schwenkanordnung der eingangs genannten Art zu schaffen, die einfach aufgebaut ist und einen geringen Bauraum benötigt.

Diese Aufgabe wird erfindungsgemäß dadurch gelöst, daß die in der Ruheposition ausgefahrene und der Betriebsposition eingefahrene Gasdruckfeder einen mit einem unter Druck stehenden Gas gefüllten Zylinder aufweist, dessen Innenraum von einem verschiebbaren Kolben in eine erste Arbeitskammer und eine zweite Arbeitskammer unterteilt ist und der Kolben einseitig eine Kolbenstange aufweist, die durch die zweite Arbeitskammer und eine Führungs- und Dichteinheit abgedichtet nach außen geführt ist, mit einer bei einem Auswärtshub des Kolbens geöffneten, von der zweiten Arbeitskammer zur ersten Arbeitskammer führenden ersten Verbindung und einer bei einem Einwärtshub des Kolbens geöffneten von der ersten Arbeitskammer zur zweiten Arbeitskammer führenden zweiten Verbindung kleineren Durchlaßquerschnitts als dem Durchlaßquerschnitt der ersten Verbindung, mit einem in dem Zylinder und auf der Kolbenstange verschiebbar angeordneten Hilfskolben, der die zweite Arbeitskammer auf ihrer dem Kolben entfernten Seite von einer im Zylinder gebildeten Hilfskammer trennt, mit einer im Endausfahrhubbereich des Kolbens geöffneten dritten Verbindung von der Hilfskammer zur zweiten Arbeitskammer sowie einer im Einfahrhub des Kolbens geöffneten vierten Verbindung von der zweiten Arbeitskammer zur Hilfskammer, wobei der Durchlaßquerschnitt der dritten Verbindung geringer ist als der Durchlaßquerschnitt der vierten Verbindung.

Wird diese erfindungsgemäße Schwenkanordnung aus ihrer nach oben gerichteten Ruheposition in ihre waagrechte Betriebsposition geschwenkt, fährt die Kolbenstange mit dem Kolben in den Zylinder ein. Dabei ist nur die von der ersten Arbeitskammer zur zweiten Arbeitskammer führende zweite Verbindung geöffnet. Durch deren geringeren Durchlaßquerschnitt erfolgt diese Schwenkbewegung gedämpft. Dabei erhöht sich auch der Druck in der ersten Arbeitskammer, was gerade auf der zweiten Hälfte des Schwenkweges einen zusätzlichen Widerstand bildet. Das Schwenkelement kommt also sanft gedämpft in seine Betriebsposition.

Bei einem Schwenken aus der Betriebsposition in die Ruheposition ist nur die von der zweiten Arbeitskammer zur ersten Arbeitskammer führende erste Verbindung geöffnet. Da die erste Verbindung einen größeren Durchlaßquerschnitt als die zweite Verbindung aufweist, erfolgt diese Schwenkbewegung geringer gedämpft, als in umgekehrte Richtung oder bei entsprechend großem Durchlaßquerschnitt der ersten Verbindung sogar weitgehend ungedämpft.

Bis zum Erreichen des Hilfskolbens und damit des Endausfahrhubes erfolgt die Ausfahrbewegung also nur gering gedämpft oder weitgehend ungedämpft. Die durch eine auf das Schwenkelement einwirkende äußere Kraft wie z. B. ein Handkraft ausgelöste Schwenkbewegung des Schwenkelements erfolgt dabei zumindest mit weitgehender Unterstützung durch die Gasdruckfeder.

Gelangt bei dieser Schwenkbewegung der Kolben in Anlage an den Hilfskolben, so muß der Hilfskolben von dem Kolben in dem Endausfahrhub bis zur vollständig ausgefahrenen Stellung von Kolben und Kolbenstange mitverschoben werden und das in der Hilfskammer vorhandene Druckgas über die dritte Verbindung zur zweiten Arbeitskammer strömen. Dies erfolgt aber gedämpft, da der Durchtrittsquerschnitt der dritten Verbindung geringer ausgebildet ist. Damit erfolgt im Endausfahrhub die Ausfahrbewegung von Kolbenstange und Kolben sanft gedämpft und ein hartes Anschlagen in der Ruheposition wird vermieden.

Durch die erfindungsgemäße Schwenkanordnung werden unterschiedliche Dämpfungen in bestimmten Hubbereichen des Einfahrhubes und des Ausfahrhubes mit einer einzigen Gasdruckfeder erreicht, was zu einem einfachen Aufbau und einem geringen Bauraumbedarf führt.

Ebenfalls zu einem geringen Bauraumbedarf führt es, wenn die Gasdruckfeder sich in oder parallel zur Schwenkebene des Schwenkelements erstreckt und mit ihrem einen Ende an einer ortsfesten ersten Lagerstelle und mit ihren anderen Ende an einer zweiten Lagerstelle an dem Schwenkelement angelenkt ist, wobei das Schwenkelement einen zweiarmigen Hebel bildet, dessen erster Hebelarm größerer Erstreckung ein Funktionselement bildet und dessen zweiter Hebelarm ein Anlenkelement bildet, an dem in einem Abstand zur Schwenkachse die zweite Lagerstelle angeordnet ist.

Dabei kann eine Anlenkung der Kolbenstange an der ersten Lagerstelle und des Zylinders an der zweiten Lagerstelle oder aber auch umgekehrt erfolgen.

Ist die ortsfeste erste Lagerstelle oberhalb der Schwenkachse in einem Abstand zu Ruheposition des Schwenkelements auf der dem Schwenkbereich des Schwenkelements abgewandten Seite angeordnet, wird besonders wenig Einbauraum benötigt.

Um bei einem Einfahren von Kolbenstange und Kolben aus ihrer vollständig ausgefahrenen Position den Hilfskolben wieder um den Endausfahrhubbereich zur zweiten Arbeitskammer hin zu bewegen, kann der Hilfskolben von einer Rückstellkraft in eine von der Führungs- und Dichteinheit entfernte Endausfahrhubbereichsposition beaufschlagt sein.

Dazu ist vorzugsweise in einfacher Ausbildung in der Hilfskammer eine die Kolbenstange mit radialem Abstand umschließende Schraubendruckfeder angeordnet ist, die mit ihrem einen Ende an der Führungs- und Dichteinheit oder einem der Führungs- und Dichteinheit nahen, zylinderfesten Anschlag abgestützt ist und mit ihrem anderen Ende den Hilfskolben in die Endausfahrhubbereichsposition beaufschlagt. Die Schraubendruckfeder weist nur eine zum Verschieben des Hilfskolbens ausreichende, geringe Kraft aus.

Ein integrierter bauraumsparender Aufbau wird dadurch erreicht, daß die erste Verbindung und/oder die zweite Verbindung im Kolben angeordnet ist.

In einfacher Ausbildung geringen Bauraumbedarfs kann dabei der Kolben eine radial umlaufende Ringnut aufweisen, in der ein Dichtring geringerer axialer Erstreckung als der axialen Breite der Ringnut angeordnet ist, der mit seiner radial äußeren Mantelfläche dichtend an der Innenwand des Zylinders in Anlage ist, wobei zwischen seiner radial inneren Mantelfläche und dem Boden der Ringnut ein Ringspalt gebildet ist, der permanent mit der ersten Arbeitskammer verbunden ist, mit einem oder mehreren in der der zweiten Arbeitskammer näheren Seitenwand der Ringnut ausgebildeten, zur Ringnut hin offenen Drosselnuten, deren Nutöffnungen von dem Dichtring oder einer mit dem Dichtring verbundenen Ringscheibe abdeckbar sind.

Bei einer Ausfahrbewegung verschiebt sich der Dichtring zur Anlage an der der ersten Arbeitskammer näheren Seitenwand der Ringnut. Da der Ringspalt permanent mit der ersten Arbeitskammer verbunden ist und der Dichtring bzw. die mit dem Dichtring verbundene Ringscheibe von der der zweiten Arbeitskammer näheren Seitenwand abgehoben ist, ist dadurch die erste Verbindung mit größerem Durchtrittsquerschnitt gebildet.

Bei der Einfahrbewegung legt sich der Dichtring bzw. die mit dem Dichtring verbundene Ringscheibe an der der zweiten Arbeitskammer näheren Seitenwand an, so daß der permanent mit der ersten Arbeitskammer verbundene Ringspalt nur noch über die einen geringeren Durchtrittsquerschnitt aufweisenden Drosselnuten mit der zweiten Arbeitskammer verbunden ist. Dadurch ist die zweite Verbindung mit kleinerem Durchtrittsquerschnitt gebildet.

Ebenfalls zu einer einfachen Ausbildung geringen Bauraumbedarfs führt es, wenn die dritte Verbindung und/oder die vierte Verbindung im Hilfskolben angeordnet ist.

Dazu kann der Hilfskolben abgedichtet in dem Zylinder geführt sein und eine koaxial durchgehende Führungsbohrung aufweisen, mit der der Hilfskolben auf der Kolbenstange verschiebbar geführt ist, wobei die dritte Verbindung durch einen Ringspalt zwischen der Kolbenstange und der Führungsbohrung gebildet ist.

Sind dabei in der der zweiten Arbeitskammer zugewandten Stirnseite des Hilfskolbens eine oder mehrere radial durchgehende weitere Drosselnuten ausgebildet, deren der zweiten Arbeitskammer zugewandte Nutöffnungen bei Anlage des Kolbens an dem Hilfskolben von dem Kolben abdeckbar sind, wobei die zweite Arbeitskammer mit den radial äußeren Enden der weiteren Drosselnuten verbindbar ist.

Um ein Umströmen des Hilfskolbens zwischen der zweiten Arbeitskammer und der Hilfskammer zu vermeiden, kann der Hilfskolben an seiner radial umlaufenden Mantelfläche eine radial umlaufende Dichtungsnut aufweisen, in der ein an der Innenwand des Zylinders anliegender zweiter Dichtring angeordnet ist.

Vorzugsweise ist das Schwenkelement ein Schwenkbett, das bei Nichtbenutzung in eine senkrecht nach oben gerichtete Ruheposition insbesondere in einen schrankähnlichen Korpus schwenkbar ist. Zur Benutzung erfolgt dann ein Verschwenken in eine waagrecht gerichtete Betriebsposition.

Das Verschwenken in die Betriebsposition wird durch Handkraftbeaufschlagung des Schwenkbetts eingeleitet, das dann aufgrund seines Eigengewichts eigenständig weiter bis in seine Betriebsposition schwenkt, wobei durch die Gasdruckfeder diese Schwenkbewegung gedämpft wird und das Schwenkbett bei Erreichen der Betriebsposition nicht am Fußboden aufschlägt sondern sanft aufsetzt.

Das Verschwenken aus der Ruheposition in die Betriebsposition erfolgt ebenfalls durch Handkraft mit Unterstützung durch die Gasdruckfeder. Im Endbereich der Schwenkbewegung erfolgt dies durch die Gasdruckfeder gedämpft, so daß das Schwenkbett sanft gedämpft die Ruheposition erreicht und nicht fest an dem schrankähnlichen Korpus anschlägt.

Ein Ausführungsbeispiel der Erfindung ist in der Zeichnung dargestellt und wird im Folgenden näher beschrieben. Es zeigen
- Figur 1: eine Prinzipdarstellung einer Schwenkanordnung in der Seitenansicht in Ruheposition und in Betriebsposition
- Figur 2: eine Längsschnittdarstellung einer Gasdruckfeder der Schwenkeinrichtung nach Figur 1.

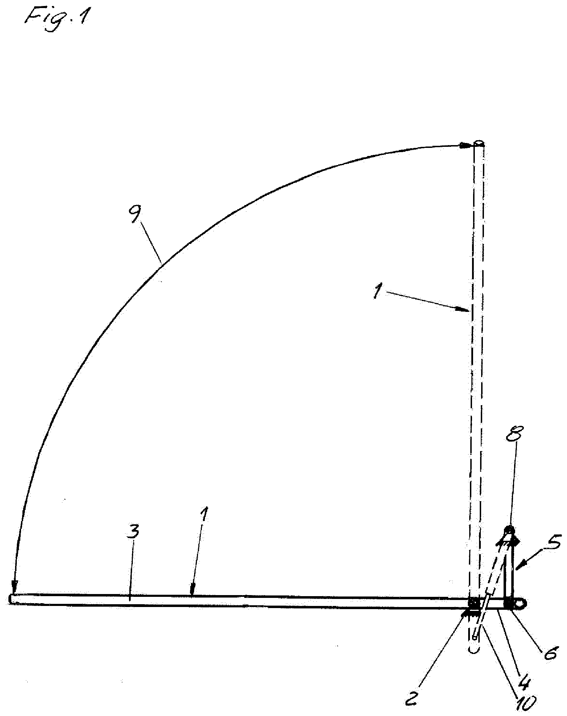

Die in Figur 1 dargestellte Schwenkanordnung ist mit durchgehender Linie in einer waagrechten Betriebsposition und mir unterbrochener Linie in senkrecht nach oben gerichteter Ruheposition dargestellt und weist ein als zweiarmiger Hebel ausgebildetes Schwenkelement 1 auf, das um eine fest angeordnete Schwenkachse 2 schwenkbar gelagert ist. Das Schwenkelement besteht aus einem ersten Hebelarm 3 größerer Erstreckung und einem zweiten Hebelarm 4 geringer Erstreckung. Parallel zur Schwenkebene des Schwenkelements 1 ist eine Gasdruckfeder 5 angeordnet, deren freies Ende der Kolbenstange 10 an einer zweiten Lagerstelle 6 an dem zweiten Hebelarm 4 in einem Abstand zur Schwenkachse 2 angelenkt ist. Das der Kolbenstange 10 entgegengesetzte Ende des Zylinders 7 der Gasdruckfeder 5 ist an einer ortsfesten Lagerstelle 8 angelenkt, die sich oberhalb der Schwenkachse 2 und in einem Abstand zur Ruheposition des Schwenkelements 1 auf der dem Schwenkbereich 9 abgewandten Seite befindet. Dieser Abstand entspricht annähernd dem Abstand der zweiten Lagerstelle zur Schwenkachse, so daß die Gasdruckfeder 5 in der Betriebsposition des Schwenkelements 1 annähernd senkrecht ausgerichtet ist.

In der Ruheposition des Schwenkelements 1 ist die Kolbenstange 10 aus dem Zylinder 7 ausgefahren und in der Betriebsposition eingefahren.

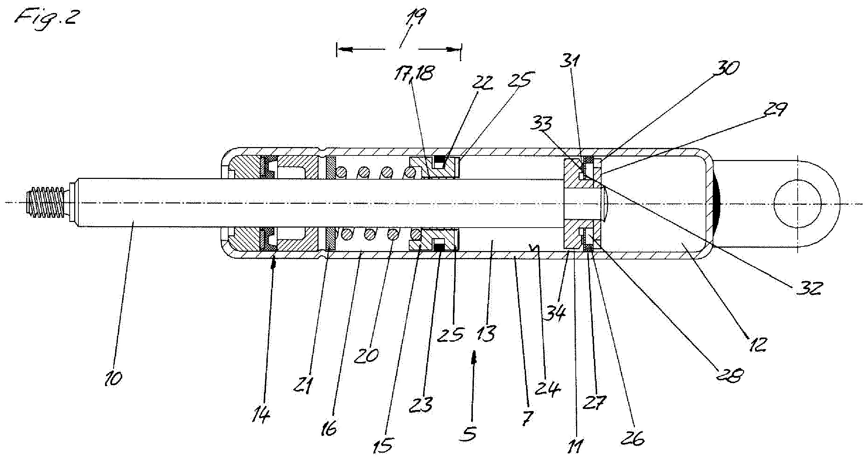

Bei der in Figur 2 näher dargestellten Gasdruckfeder 5 ist in dem mit einem unter Druck stehenden Gas gefüllten Zylinder 7 ein Kolben 11 axial verschiebbar angeordnet, an dem das in den Zylinder 7 ragende Ende der Kolbenstange 10 fest angeordnet ist. Der Kolben 11 unterteilt den Innenraum des Zylinders 7 in eine der Kolbenstange 10 abgewandte erste Arbeitskammer 12 und eine kolbenstangenseitige zweite Arbeitskammer 13. Die Kolbenstange 10 ist durch die zweite Arbeitskammer 13 und eine Führungs- und Dichteinheit 14 abgedichtet nach außen geführt.

In dem Zylinder 7 ist weiterhin ein Hilfskolben 15 verschiebbar angeordnet, der die zweite Arbeitskammer 13 auf ihrer dem Kolben abgewandten Seite von einer im Zylinder 7 gebildeten Hilfskammer 16 trennt.

Der Hilfskolben 15 weist eine durchgehende koaxiale Führungsbohrung 17 auf, durch die die Kolbenstange 10 hindurchgeführt ist, wobei zwischen der Kolbenstange 10 und der Führungsbohrung 17 ein Ringspalt 18 gebildet ist. Über den Ringspalt 18 sind die beiden Seiten des Hilfskolbens 15 miteinander verbunden.

In Figur 1 ist der Hilfskolben 15 mit seiner der zweiten Arbeitskammer 13 zugewandten Stirnseite um einen Endausfahrhubbereich 19 von dem Bereich der Führungs- und Dichteinheit 14 beabstandet und wird in diese Position von dem einen Ende einer Schraubendruckfeder 20 beaufschlagt. Die Schraubendruckfeder 20 umschließt mit radialem Abstand die Kolbenstange 10 in der Hilfskammer 16 und ist mit ihrem anderen Ende an einer Abstützscheibe 21 abgestützt, die an dem dem Kolben 11 abgewandten Ende der Hilfskammer 16 im Zylinder 7 fest angeordnet ist.

Der Hilfskolben 15 weist an seiner radial umlaufenden Mantelfläche eine radial umlaufende Dichtungsnut 22 auf, in der ein zweiter Dichtring 23 angeordnet ist, der eine Verbindung der beiden axialen Seiten des Hilfskolbens 15 zwischen dem Hilfskolben 15 und der Innenwand 24 des Zylinders 7 unterbindet.

Auf seiner dem Kolben 11 zugewandten Stirnseite weist der Hilfskolben 15 radial durchgehende zweite Drosselnuten 25 auf, deren gesamter Durchlaßquerschnitt kleiner ist, als der Durchlaßquerschnitt des Ringspalts 18. Der Kolben 11 weist an seiner radial umlaufenden Mantelfläche eine radial umlaufende Ringnut 26 auf, in der ein erster Dichtring 27 geringerer axialer Erstreckung als der axialen Breite der Ringnut 26 angeordnet ist, so daß der erste Dichtring 27 zwischen den beiden Seitenwänden der Ringnut 26 bewegbar ist. Mit seiner radial umlaufenden äußeren Mantelfläche ist der erste Dichtring 27 in dichtender Anlage an der Innenwand 24 des Zylinders 7.

Zwischen der radial inneren Mantelfläche des ersten Dichtrings 27 und dem Boden der Ringnut 26 ist ein zweiter Ringspalt 28 gebildet. Die der ersten Arbeitskammer 12 zugewandte Seitenwand der Ringnut 26 ist durch eine Sternscheibe 29 gebildet, deren Strahlenlücken 30 den zweiten Ringspalt 28 permanent mit großem Querschnitt mit der ersten Arbeitskammer 12 verbinden.

In der der zweiten Arbeitskammer 13 näheren Seitenwand 33 der Ringnut 26 sind zur Ringnut 26 offene, radiale erste Drosselnuten 31 ausgebildet. An seiner der zweiten Arbeitskammer 13 zugewandten Seite ist an dem ersten Dichtring 27 eine Ringscheibe 32 angeordnet, durch die die zur Ringnut 26 gerichteten Öffnungen der Drosselnuten 31 abgedeckt sind, wenn sich der erste Dichtring 27 in seiner der zweiten Arbeitskammer 13 näheren Position befindet. In dieser Stellung ist der zweite Ringspalt 28 in der Ringnut 26 nur über die einen geringeren Durchlaßquerschnitt aufweisenden ersten Drosselnuten 31 radial nach außen mit einem zwischen der äußeren Mantelfläche des Kolbens und der Innenwand 24 des Zylinders 7 dritten Ringspalt 34 und damit mit der zweiten Arbeitskammer 13 verbunden.

Liegt der erste Dichtring 27 an der Sternscheibe 29 an, ist auch die Ringscheibe 32 von der Seitenwand 33 abgehoben, so daß zwischen der Ringscheibe 32 und der Seitenwand 33 ein großer Durchlaßquerschnitt von dem zweiten Ringspalt 28 in der Ringnut 26 zum dritten Ringspalt 34 und der zweiten Arbeitskammer 13 vorhanden ist.

Bei der Einfahrbewegung von Kolbenstange 10 und Kolben 11 legt sich die mit dem ersten Dichtring 27 verbundene Ringscheibe 32 an der der zweiten Arbeitskammer 13 näheren Seitenwand 33 an, so daß der permanent mit der ersten Arbeitskammer 12 verbundene zweite Ringspalt 28 nur noch über die einen geringeren Durchtrittsquerschnitt aufweisenden ersten Drosselnuten 31 mit der zweiten Arbeitskammer 13 verbunden ist. Dadurch ist eine von der ersten Arbeitskammer 12 zur zweiten Arbeitskammer 13 führende zweite Verbindung mit kleinerem Durchtrittsquerschnitt gebildet, so daß die Bewegung des Schwenkelements 1 aus seiner senkrechten in seine waagrechte Position gedämpft erfolgt. Der Kolben 11 hebt gleich zu Beginn der Einfahrbewegung von dem Hilfskolben 15 ab, so daß Druckgas weitgehend ungedämpft durch den eine dritte Verbindung bildenden Ringspalt 18 von der Hilfskammer 16 zur zweiten Arbeitskammer 13 strömen kann. Durch die Schraubendruckfeder 20, die nur geringe Kraft aufweist, wird der Hilfskolben 15 dabei in seine Endausfahrhubposition bewegt.

Bei einer Ausfahrbewegung verschiebt sich der erste Dichtring 27 zur Anlage an die der ersten Arbeitskammer 12 nähere Sternscheibe 29 der Ringnut 26. Da der zweite Ringspalt 28 über die Strahlenlücken 30 permanent mit der ersten Arbeitskammer 12 verbunden ist und die mit dem Dichtring 27 verbundene Ringscheibe 32 von der der zweiten Arbeitskammer 13 näheren Seitenwand 33 abgehoben ist, ist dadurch eine erste Verbindung mit größerem Durchtrittsquerschnitt gebildet, so daß zunächst eine zumindest weitgehend ungedämpfte Schwenkbewegung des Schwenkelements 1 aus seiner waagrechten in seine senkrechte Position erfolgt.

Gelangt dabei der Kolben 11 in Anlage an die dem Kolben 11 zugewandte Stirnseite des Hilfskolbens 15, so daß nur noch eine eine vierte Verbindung bildende Strömungsmöglichkeit des Druckgases aus der zweiten Arbeitskammer 13 durch die zweiten Drosselnuten 25 und den Ringspalt 18 zur Hilfskammer 16 vorhanden ist. Die Drosselnuten 25 führen dabei zu einer gedämpften Ausfahrbewegung im Endausfahrhubbereich 19 von Kolben 11 und Kolbenstange 10.

### Bezugszeichenliste

- 1: Schwenkelement
- 2: Schwenkachse
- 3: erster Hebelarm
- 4: zweiter Hebelarm
- 5: Gasdruckfeder
- 6: zweite Lagerstelle
- 7: Zylinder
- 8: ortsfeste Lagerstelle
- 9: Schwenkbereich
- 10: Kolbenstange
- 11: Kolben
- 12: erste Arbeitskammer
- 13: zweite Arbeitskammer
- 14: Führungs- und Dichteinheit
- 15: Hilfskolben
- 16: Hilfskammer
- 17: Führungsbohrung
- 18: Ringspalt
- 19: Endausfahrhubbereich
- 20: Schraubendruckfeder
- 21: Abstützscheibe
- 22: Dichtungsnut
- 23: zweiter Dichtring
- 24: Innenwand
- 25: zweite Drosselnuten
- 26: Ringnut
- 27: erster Dichtring
- 28: zweiter Ringspalt
- 29: Sternscheibe
- 30: Strahlenlücken
- 31: erste Drosselnuten
- 32: Ringscheibe
- 33: Seitenwand
- 34: dritter Ringspalt

## Patentansprüche

1. Schwenkanordnung mit einem Schwenkelement (9), das zwischen einer senkrecht nach oben gerichteten Ruheposition und einer waagrecht gerichteten Betriebsposition um eine an seinem einen Endbereich angeordnete Schwenkachse (2) schwenkbar ist, wobei die Schwenkbewegung des Schwenkelements (1) durch eine Gasdruckfeder (5) kraftunterstützbar und dämpfbar ist, **dadurch gekennzeichnet, daß** die in der Ruheposition ausgefahrene und der Betriebsposition eingefahrene Gasdruckfeder (5) einen mit einem unter Druck stehenden Gas gefüllten Zylinder (7) aufweist, dessen Innenraum von einem verschiebbaren Kolben (11) in eine erste Arbeitskammer (12) und eine zweite Arbeitskammer (13) unterteilt ist und der Kolben (11) einseitig eine Kolbenstange (10) aufweist, die durch die zweite Arbeitskammer (13) und eine Führungs- und Dichteinheit (14) abgedichtet nach außen geführt ist, mit einer bei einem Auswärtshub des Kolbens (11) geöffneten, von der zweiten Arbeitskammer (13) zur ersten Arbeitskammer (12) führenden ersten Verbindung und einer bei einem Einwärtshub des Kolbens (11) geöffneten von der ersten Arbeitskammer (12) zur zweiten Arbeitskammer (13) führenden zweiten Verbindung kleineren Durchlaßquerschnitts als dem Durchlaßquerschnitt der ersten Verbindung, mit einem in dem Zylinder (7) und auf der Kolbenstange (10) verschiebbar angeordneten Hilfskolben (15), der die zweite Arbeitskammer (13) auf ihrer dem Kolben (11) entfernten Seite von einer im Zylinder (7) gebildeten Hilfskammer (16) trennt, mit einer im Endausfahrhubbereich (19) des Kolbens (11) geöffneten dritten Verbindung von der Hilfskammer (16) zur zweiten Arbeitskammer (13) sowie einer im Einfahrhub des Kolbens (11) geöffneten vierten Verbindung von der zweiten Arbeitskammer (13) zur Hilfskammer (16), wobei der Durchlaßquerschnitt der dritten Verbindung geringer ist als der Durchlaßquerschnitt der vierten Verbindung.

2. Schwenkanordnung nach Anspruch 1, **dadurch gekennzeichnet, daß** die Gasdruckfeder (5) sich in oder parallel zur Schwenkebene des Schwenkelements (1) erstreckt und mit ihrem einen Ende an einer ortsfesten ersten Lagerstelle (8) und mit ihren anderen Ende an einer zweiten Lagerstelle (6) an dem Schwenkelement (1) angelenkt ist, wobei das Schwenkelement (1) einen zweiarmigen Hebel bildet, dessen erster Hebelarm (3) größerer Erstreckung ein Funktionselement bildet und dessen zweiter Hebelarm (4) ein Anlenkelement bildet, an dem in einem Abstand zur Schwenkachse (2) die zweite Lagerstelle (6) angeordnet ist.

3. Schwenkanordnung nach Anspruch 2, **dadurch gekennzeichnet, daß** die ortsfeste erste Lagerstelle (8) oberhalb der Schwenkachse (2) in einem Abstand zu Ruheposition des Schwenkelements (1) auf der dem Schwenkbereich (9) des Schwenkelements (1) abgewandten Seite angeordnet ist.

4. Schwenkanordnung nach einem der vorhergehenden Ansprüche, **dadurch gekennzeichnet, daß** der Hilfskolben (15) von einer Rückstellkraft in eine von der Führungs- und Dichteinheit (14) entfernte Endausfahrhubbereichsposition beaufschlagt ist.

5. Schwenkanordnung nach Anspruch 4, **dadurch gekennzeichnet, daß** in der Hilfskammer (16) eine die Kolbenstange (10) mit radialem Abstand umschließende Schraubendruckfeder (20) angeordnet ist, die mit ihrem einen Ende an der Führungs- und Dichteinheit oder einem der Führungs- und Dichteinheit (14) nahen, zylinderfesten Anschlag (21) abgestützt ist und mit ihrem anderen Ende den Hilfskolben (15) in die Endausfahrhubbereichsposition beaufschlagt.

6. Schwenkanordnung nach einem der vorhergehenden Ansprüche, **dadurch gekennzeichnet, daß** die erste Verbindung und/oder die zweite Verbindung im Kolben (11) angeordnet ist.

7. Schwenkanordnung nach Anspruch 6, **dadurch gekennzeichnet, daß** der Kolben (11) eine radial umlaufende Ringnut (26) aufweist, in der ein Dichtring (27) geringerer axialer Erstreckung als der axialen Breite der Ringnut (26) angeordnet ist, der mit seiner radial äußeren Mantelfläche dichtend an der Innenwand (24) des Zylinders (7) in Anlage ist, wobei zwischen seiner radial inneren Mantelfläche und dem Boden der Ringnut (26) ein Ringspalt (28) gebildet ist, der permanent mit der ersten Arbeitskammer (12) verbunden ist, mit einem oder mehreren in der der zweiten Arbeitskammer (13) näheren Seitenwand (33) der Ringnut (26) ausgebildeten, zur Ringnut (26) hin offenen Drosselnuten (31), deren Nutöffnungen von dem Dichtring oder einer mit dem Dichtring (27) verbundenen Ringscheibe (32) abdeckbar sind.

8. Schwenkanordnung nach einem der vorhergehenden Ansprüche, **dadurch gekennzeichnet, daß** die dritte Verbindung und/oder die vierte Verbindung im Hilfskolben (15) angeordnet ist.

9. Schwenkanordnung nach Anspruch 8, **dadurch gekennzeichnet, daß** der Hilfskolben (15) abgedichtet in dem Zylinder (7) geführt ist und eine koaxial durchgehende Führungsbohrung (17) aufweist, mit der der Hilfskolben (15) auf der Kolbenstange (10) verschiebbar geführt ist wobei die dritte Verbindung durch einen Ringspalt (18) zwischen der Kolbenstange (10) und der Führungsbohrung (17) gebildet ist.

10. Schwenkanordnung nach Anspruch 9, **dadurch gekennzeichnet, daß** in der der zweiten Arbeitskammer (13) zugewandten Stirnseite des Hilfskolbens (15) eine oder mehrere radial durchgehende weitere Drosselnuten (25) ausgebildet sind, deren der zweiten Arbeitskammer (13) zugewandte Nutöffnungen bei Anlage des Kolbens (11) an dem Hilfskolben (15) von dem Kolben (11) abdeckbar sind, wobei die zweite Arbeitskammer (13) mit den radial äußeren Enden der weiteren Drosselnuten (25) verbindbar ist.

11. Schwenkanordnung nach einem der Ansprüche 9 und 10, **dadurch gekennzeichnet, daß** der Hilfskolben (15) an seiner radial umlaufenden Mantelfläche eine radial umlaufende Dichtungsnut (22) aufweist, in der ein an der Innenwand (24) des Zylinders (7) anliegender zweiter Dichtring (23) angeordnet ist.

12. Schwenkanordnung nach einem der vorhergehenden Ansprüche, **dadurch gekennzeichnet, daß** das Schwenkelement ein Schwenkbett ist.

## Claims

1. Pivoting arrangement with a pivoting element (1) which is pivotable between a vertically upwardly directed inoperative position and a horizontally directed operative position about a pivot axis (2) arranged at one of its end regions, wherein the pivoting movement of the pivoting element (1) can be force-assisted and damped by a gas-pressure spring (5), **characterized in that** the gas-pressure spring (5), which is extended in the inoperative position and retracted in the operative position, has a cylinder (7) which is filled with a pressurized gas and whose interior is subdivided into a first working chamber (12) and a second working chamber (13) by a displaceable piston (11), and the piston (11) has on one side a piston rod (10) which is outwardly guided in a sealed manner through the second working chamber (13) and a guiding and sealing unit (14), with a first connection which is opened during an outward stroke of the piston (11) and leads from the second working chamber (13) to the first working chamber (12), and a second connection which is opened during an inward stroke of the piston (11), leads from the first working chamber (12) to the second working chamber (13) and has a smaller passage cross section than the passage cross section of the first connection, with an auxiliary piston (15) which is arranged displaceably in the cylinder (7) and on the piston rod (10) and which separates the second working chamber (13), on its side remote from the piston (11), from an auxiliary chamber (16) formed in the cylinder (7), with a third connection from the auxiliary chamber (16) to the second working chamber (13) that is opened in the end extension stroke region (19) of the piston (11), and a fourth connection from the second working chamber (13) to the auxiliary chamber (16) that is opened in the retraction stroke of the piston (11), wherein the passage cross section of the third connection is smaller than the passage cross section of the fourth connection.

2. Pivoting arrangement according to Claim 1, **characterized in that** the gas-pressure spring (5) extends in or parallel to the pivoting plane of the pivoting element (1) and has one of its ends articulated at a positionally fixed first bearing point (8) and has its other end articulated at a second bearing point (6) on the pivoting element (1), wherein the pivoting element (1) forms a two-armed lever whose first lever arm (3) of a greater extent forms a functional element and whose second lever arm (4) forms an articulation element on which the second bearing point (6) is arranged at a distance from the pivot axis (2).

3. Pivoting arrangement according to Claim 2, **characterized in that** the positionally fixed first bearing point (8) is arranged above the pivot axis (2) at a distance from the inoperative position of the pivoting element (1) on the side facing away from the pivoting region (9) of the pivoting element (1).

4. Pivoting arrangement according to one of the preceding claims, **characterized in that** the auxiliary piston (15) is urged by a restoring force into an end extension stroke region position remote from the guiding and sealing unit (14).

5. Pivoting arrangement according to Claim 4, **characterized in that** a helical compression spring (20) enclosing the piston rod (10) at a radial distance is arranged in the auxiliary chamber (16) and has one of its ends supported on the guiding and sealing unit or on a cylinder-mounted stop (21) close to the guiding and sealing unit (14) and has its other end urging the auxiliary piston (15) into the end extension stroke region position.

6. Pivoting arrangement according to one of the preceding claims, **characterized in that** the first connection and/or the second connection are or is arranged in the piston (11).

7. Pivoting arrangement according to Claim 6, **characterized in that** the piston (11) has a radially encircling annular groove (26) in which a sealing ring (27) of smaller axial extent than the axial width of the annular groove (26) is arranged and bears by way of its radially outer lateral surface sealingly against the inner wall (24) of the cylinder (7), wherein an annular gap (28), which is permanently connected to the first working chamber (12), is formed between its radially inner lateral surface and the bottom of the annular groove (26), with one or more throttle grooves (31) which are formed in the side wall (33) of the annular groove (26) that is closer to the second working chamber (13), are open towards the annular groove (26) and whose groove openings can be covered by the sealing ring or an annular disc (32) connected to the sealing ring (27).

8. Pivoting arrangement according to one of the preceding claims, **characterized in that** the third connection and/or the fourth connection are or is arranged in the auxiliary piston (15).

9. Pivoting arrangement according to Claim 8, **characterized in that** the auxiliary piston (15) is guided in a sealed manner in the cylinder (7) and has a coaxially continuous guide bore (17) by means of which the auxiliary piston (15) is guided displaceably on the piston rod (10), wherein the third connection is formed by an annular gap (18) between the piston rod (10) and the guide bore (17) .

10. Pivoting arrangement according to Claim 9, **characterized in that** the end side of the auxiliary piston (15) that faces the second working chamber (13) has formed therein one or more radially continuous further throttle grooves (25) whose groove openings facing the second working chamber (13) can be covered by the piston (11) when the piston (11) bears against the auxiliary piston (15), wherein the second working chamber (13) can be connected to the radially outer ends of the further throttle grooves (25).

11. Pivoting arrangement according to either of Claims 9 and 10, **characterized in that** the auxiliary piston (15) has on its radially encircling lateral surface a radially encircling sealing groove (22) in which there is arranged a second sealing ring (23) which bears against the inner wall (24) of the cylinder (7).

12. Pivoting arrangement according to one of the preceding claims, **characterized in that** the pivoting element is a pivoting bed.

## Revendications

1. Ensemble pivotant avec un élément pivotant (1) pouvant pivoter entre une position de repos orientée perpendiculairement vers le haut et une position de fonctionnement orientée verticalement autour d'un axe de pivotement (2) disposé sur l'une de ses zones d'extrémité, dans lequel le mouvement de pivotement de l'élément pivotant (1) peut être assisté par force et amorti par un ressort sous pression de gaz (5), **caractérisé en ce que** le ressort sous pression de gaz (5) sorti dans la position de repos et rentré dans la position de fonctionnement présente un cylindre (7) rempli par du gaz sous pression dont l'espace intérieur est divisé par un piston mobile (11) en une première chambre de travail (12) et une deuxième chambre de travail (13) et le piston (11) présente une tige de piston (10) d'un côté, laquelle est guidée de façon étanchéifiée à travers la deuxième chambre de travail (13) et une unité de guidage et d'étanchéification (14) jusque vers l'extérieur, avec une première connexion ouverte en cas de course vers l'extérieur du piston (11) allant de la deuxième chambre de travail (13) à la première chambre de travail (12), et une deuxième connexion ouverte en cas de course vers l'intérieur du piston (11) allant de la première chambre de travail (12) à la deuxième chambre de travail (13) d'une section de passage plus petite que la section de passage de la première connexion, avec un piston auxiliaire (15) disposé de façon mobile sur la tige de piston (10) dans le cylindre (7), lequel sépare la deuxième chambre de travail (13) sur son côté éloigné du piston (11) d'une chambre auxiliaire (16) formée dans le cylindre (7), avec une troisième connexion ouverte dans la zone de course vers l'extérieur d'extrémité (19) du piston (11) de la chambre auxiliaire (16) à la deuxième chambre de travail (13) ainsi qu'une quatrième connexion ouverte dans la course vers l'intérieur du piston (11) de la deuxième chambre de travail (13) à la chambre auxiliaire (16), dans lequel la section de passage de la troisième connexion est plus petite que la section de passage de la quatrième connexion.

2. Ensemble pivotant selon la revendication 1, **caractérisé en ce que** le ressort sous pression de gaz (5) s'étend dans le plan de pivotement, ou parallèlement à celui-ci, de l'élément pivotant (1) et est articulé avec l'une de ses extrémités sur un premier point d'appui stationnaire (8) et avec l'autre extrémité, sur un deuxième point d'appui (6) sur l'élément pivotant (1), dans lequel l'élément pivotant (1) forme un levier à deux bras dont le premier bras de levier (3) de plus grande étendue forme un élément fonctionnel et dont le deuxième bras de levier (4) forme un élément d'articulation sur lequel le deuxième point d'appui (6) est disposé à une distance de l'axe de pivotement (2).

3. Ensemble pivotant selon la revendication 2, **caractérisé en ce que** le premier point d'appui stationnaire (8) est disposé au-dessus de l'axe de pivotement (2) à une distance de la position de repos de l'élément pivotant (1) sur le côté tournant le dos à la zone de pivotement (9) de l'élément pivotant (1).

4. Ensemble pivotant selon l'une des revendications précédentes, **caractérisé en ce que** le piston auxiliaire (15) est sollicité par une force de rappel dans une position de zone de course vers l'extérieur d'extrémité éloignée de l'unité de guidage et d'étanchéification (14).

5. Ensemble pivotant selon la revendication 4, **caractérisé en ce qu'**un ressort de compression à boudin (20) entourant la tige de piston (10) avec une distance radiale est disposé dans la chambre auxiliaire (16), lequel est en appui avec l'une de ses extrémités sur l'unité de guidage et d'étanchéification ou une butée (21) fixe du cylindre proche de l'unité de guidage et d'étanchéification (14) et sollicite avec son autre extrémité le piston auxiliaire (15) dans la position de zone de course vers l'extérieur d'extrémité.

6. Ensemble pivotant selon l'une des revendications précédentes, **caractérisé en ce que** la première connexion et/ou la deuxième connexion est disposée dans le piston (11).

7. Ensemble pivotant selon la revendication 6, **caractérisé en ce que** le piston (11) présente une rainure annulaire (26) radialement périphérique dans laquelle une bague d'étanchéité (27) à étendue axiale inférieure à la largeur axiale de la rainure annulaire (26) est disposée, laquelle repose de façon étanche avec sa surface d'enveloppe extérieure radiale contre la paroi intérieure (24) du cylindre (7), dans lequel, entre sa surface d'enveloppe intérieure radiale et le fond de la rainure annulaire (26), une fente annulaire (28) est formée, laquelle est reliée en permanence à la première chambre de travail (12), avec une ou plusieurs rainure(s) d'étranglement (31) ouvertes vers la rainure annulaire (26) réalisées dans la paroi latérale (33) plus proche de la deuxième chambre de travail (13) de la rainure annulaire (26), dont les ouvertures de rainure peuvent être recouvertes par la bague d'étanchéité ou un disque annulaire (32) relié à la bague d'étanchéité (27).

8. Ensemble pivotant selon l'une des revendications précédentes, **caractérisé en ce que** la troisième connexion et/ou la quatrième connexion est disposée dans le piston auxiliaire (15).

9. Ensemble pivotant selon la revendication 8, **caractérisé en ce que** le piston auxiliaire (15) est guidé de façon étanchéifiée dans le cylindre (7) et présente un alésage de guidage coaxialement d'un seul tenant (17) avec lequel le piston auxiliaire (15) est guidé de façon mobile sur la tige de piston (10), dans lequel la troisième connexion est formée par une fente annulaire (18) entre la tige de piston (10) et l'alésage de guidage (17).

10. Ensemble pivotant selon la revendication 9, **caractérisé en ce que**, dans le côté frontal tourné vers la deuxième chambre de travail (13) du piston auxiliaire (15), une ou plusieurs autres rainures d'étranglement (25) radialement d'un seul tenant sont formées, dont les ouvertures de rainure tournées vers la deuxième chambre de travail (13) peuvent être recouvertes par le piston (11) en cas de butée du piston (11) contre le piston auxiliaire (15), dans lequel la deuxième chambre de travail (13) peut être reliée aux extrémités radialement à l'extérieur des autres rainures d'étranglement (25).

11. Ensemble pivotant selon l'une des revendications 9 et 10, **caractérisé en ce que** le piston auxiliaire (15) présente, sur sa surface d'enveloppe radialement périphérique, une rainure d'étanchéité (22) radialement périphérique dans laquelle une deuxième bague d'étanchéité (23) est disposée de manière à reposer contre la paroi intérieure (24) du cylindre (7).

12. Ensemble pivotant selon l'une des revendications précédentes, **caractérisé en ce que** l'élément pivotant est un lit pivotant.
